Europäisches Patentamt

European Patent Office

Office européen des brevets

(11) Veröffentlichungsnummer: **0 255 021 B1**

# EUROPÄISCHE PATENTSCHRIFT

(45) Veröffentlichungstag der Patentschrift: **14.10.92**

(21) Anmeldenummer: **87110527.6**

(22) Anmeldetag: **21.07.87**

(51) Int. Cl.⁵: **A01D 34/08**, B62D 51/00

---

(54) **Einachsmotormäher.**

---

(30) Priorität: **31.07.86 DE 3626015**

(43) Veröffentlichungstag der Anmeldung:
**03.02.88 Patentblatt 88/05**

(45) Bekanntmachung des Hinweises auf die
Patenterteilung:
**14.10.92 Patentblatt 92/42**

(84) Benannte Vertragsstaaten:
**AT CH DE FR IT LI**

(56) Entgegenhaltungen:
**CH-A- 343 169**
**DE-A- 3 503 938**
**DE-U- 8 535 835**
**GB-A- 2 164 233**
**US-A- 4 392 538**

(73) Patentinhaber: **Julius Tielbürger GmbH & Co.
KG
Oppenwehe Nr. 284
W-4995 Stemwede(DE)**

(72) Erfinder: **Tielbürger, Julius
Oppenwehe Nr. 295
W-4995 Stemwede 3(DE)**

(74) Vertreter: **Stracke, Alexander, Dipl.-Ing. et al
Jöllenbecker Strasse 164
W-4800 Bielefeld 1(DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen Einachsmotormäher mit einem gegen andere Bearbeitungs- und/oder Pflegegeräte auswechselbaren Mähbalken, der mit einem um eine vertikale Achse schwenkbaren und in verschiedenen Stellungen arretierbaren Lenker versehen ist, wobei die Arretiervorrichtung aus einer mit mehreren Arretierbohrungen versehenen Platte besteht, die durch Befestigungsschrauben mit einer am Getriebegehäuse festgelegten Grundplatte verbunden ist, und an der Grundplatte ein vertikales Aufnahmerohr für einen am Lenker befestigten Lagerzapfen angeordnet ist, und der Lenker einen in vertikaler Richtung bewegbaren Arretierbolzen aufweist, der in jeweils eine der Rastbohrungen der Platte eingreift.

Einachsmotormäher der zuvor genannten Art sind allgemein bekannt (US-A-4 392 538). Das Hauptanwendungsgebiet ist die Pflege des Geländes ringsum von Häusern, Betrieben sowie von Obstgeräten, Parkanlagen u.dgl. Um derartige Motormäher vielseitig einsetzen zu können, kann der Mähbalken beispielsweise gegen ein Schneeräumschild oder eine Kehrmaschine ersetzt werden.

Die Führung des Mähers erfolgt über den aus zwei Holmen bestehenden Lenker. Von der Bedienungsperson aus gesehen, verlaufen die Holme konvergierend in Richtung zum Getriebegehäuse. Die der Bedienungsperson abgewandt liegenden Enden der Holme sind an einer in Richtung zum Getriebegehäuse hin offenen topfförmigen Aufnahme festgelegt, in die ein vertikal verlaufendes Führungsrohr für den Arretierbolzen eingesetzt ist. An der topfförmigen Aufnahme ist ferner der Lagerzapfen angeordnet. An der dem Lenker zugeordnetem Seite ist an dem Getriebe die Grundplatte eingesetzt, die das Aufnahmerohr für den Lagerzapfen trägt. Zwischen der topfförmigen Aufnahme und der Lagerplatte liegt die mit den Arretierbohrungen versehene Platte, die durch zwei Befestigungsschrauben an der Grundplatte befestigt ist. Die Arretierbohrungen liegen auf einem Radius, dessen Mittelpunkt mit der Längsachse des Lagerzapfens bzw. des Aufnahmerohres zusammenfällt. Üblicherweise sind drei Arretierbohrungen vorgesehen, die so gelegt sind, daß die gedachte Mittellängsachse des Lenkers senkrecht zur Radachse verläuft, wenn der Arretierbolzen in die mittlere Arretierbohrung eingreift. Beim Mähen an Böschungen oder beim Mähen entlang von Hecken, Zäunen o.dgl. wird der Lenker in eine gegenüber der Mittelstellung schrägstehende Stellung gebracht. Dabei greift der Arretierbolzen in eine der äußeren Arretierbohrungen ein.

Die Verbindung des Lenkers mit dem Getriebegehäuse ist im Sinne einer Steckverbindung zu sehen, die ein relativ großes Spiel aufweist, damit auch bei einer nicht zu verhindernden Verschmutzung ein leichtes Wechseln des Lenkers von einer Stellung in die andere möglich ist.

Als besonders nachteilig wird es bei der an sich bewährten Konstruktion empfunden, daß insbesondere beim Mähen von Böschungen sehr starke Erschütterungen auf den Lenker und somit auf die Bedienungsperson übertragen werden. In der Praxis kommt es häufig vor, daß Böschungen entlang von Straßen, Wegen u.dgl. zu mähen sind. Das bedeutet, daß während eines Arbeitstages in unzumutbarer Weise unter den sich aus der Schräglage ergebenden, erschwerten Bedingungen zu arbeiten ist.

Die auf den Lenker übertragenen, zu den bereits erwähnten Erschütterungen führenden Schwingungen werden einerseits durch den ein oszillierndes Messer aufweisenden Mähbalken und andererseits durch den als Verbrennungsmotor ausgebildeten Antriebsmotor für den Fahrantrieb und für den Antrieb des Messers erzeugt.

Der vorliegenden Erfindung liegt demzufolge die Aufgabe zugrunde, einen Einachsmotormäher der eingangs genannten Art mit konstruktiv einfachen Mitteln so weiterzubilden, daß auch beim Mähen in einer durch eine Hanglage des Geländes sich ergebenden Schrägstellung des Mähers die von dem Mähbalken und von dem Antriebsmotor erzeugten Schwingungen zumindest soweit gedämpft werden, daß eine ggf. noch vorhandene Übertragung auf den Lenker praktisch nicht mehr wahrnehmbar ist.

Die Lösung der gestellten Aufgabe ergibt sich aus dem Kennzeichen des Anspruches 1.

Die mit den Arretierbohrungen versehene Platte ist im Sinne eines Bindegliedes zwischen der Maschine und dem Lenker zu sehen. Da diese Platte durch den federelastischen Ring nunmehr gegenüber der Grundplatte innerhalb einer durch die Elastizität des Ringes gegebenen Grenze bewegbar ist, werden die Schwingungen zumindest weitgehend gedämpft. Sofern noch Restschwingungen auftreten, werden diese nicht auf den Lenker weiterübertragen, da durch den umlaufenden Spalt auch eine Bewegung der Maschine gegenüber dem Lenker notwendig ist. Es hat sich durch diese verblüffend einfache Maßnahme herausgestellt, daß auch keine zu Erschütterungen führenden Schwingungen auf den Lenker übertragen werden, wenn beim Mähen von Böschungen der Arretierzapfen linienförmig an der in der Platte vorgesehenen Arretierbohrung anliegt. Dies dürfte an der Überlagerung und auch an der Aufhebung von den vom Mähbalken und vom Antriebsmotor erzeugten Schwingungen liegen.

Zweckmäßigerweise ist der umlaufende Spalt so groß ausgebildet, daß der maximale Hubweg des Arretierbolzens kleiner ist als der maximale Federweg des jeweiligen in dem elastischen Ring gelagerten Schaftes einer Befestigungsschraube, da die Deformierung des elastischen Ringes begrenzt ist, so daß dieser nicht überbeansprucht wird. Dadurch ist eine ausreichende Lebensauder des elastischen Ringes sichergestellt.

In besonders vorteilhafter Weise ist der elastische Ring aus einem starren Außenring und einem starren Innenring und einem Zwischenring aus einem elastischen Material gefertigt. Der Außen- und Innendurchmesser des elastischen Ringes liegt dann innerhalb der zulässigen Toleranzen und läßt sich außerdem problemlos montieren. Fernet ist die Fertigung besonders einfach.

Weitere Kennzeichen und Merkmale einer vorteilhaften Ausgestaltung der vorliegenden Erfindung sind Gegenstand von weiteren Unteransprüchen und ergeben sich aus der nachfolgenden Beschreibung eines bevorzugten Ausführungsbeispiels.

Es zeigen:

Fig. 1 einen mit einem Mähbalken ausgerüsteten Einachsmotormäher im Aufriß,

Fig. 2 eine Einzelheit nach der Fig. 1 im Vertikalschnitt, senkrecht zur Radachse, die Verbindung des Lenkers mit dem GEtriebegehäuse zeigend,

Fig. 3 einen der Fig. 2 entsprechenden Vertikalschnitt, jedoch parallel zur Radache,

Fig. 4 einen Schnitt längs der Linie IV-IV in der Fig. 2 und

Fig. 5 den Lenker des Einachsmotormähers in den verschiedenen Betriebsstellungen, in Richtung des Pfeiles V in der Fig. 1 gesehen.

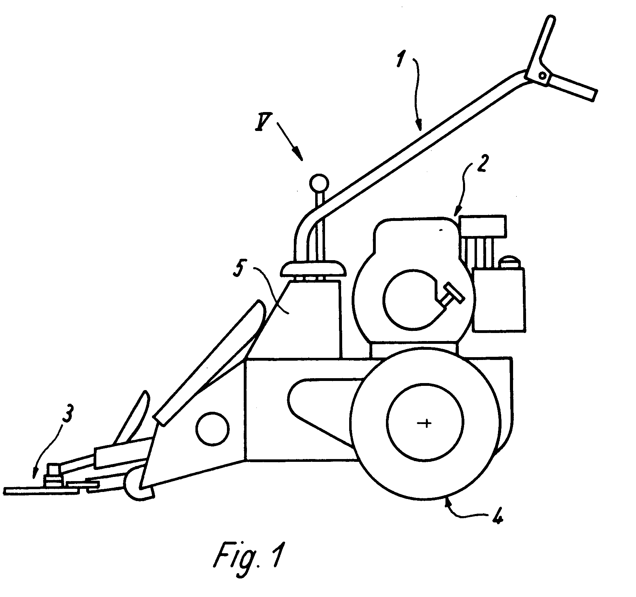

Der in der Fig. 1 als ein bevorzugtes Ausführungsbeispiel aufgezeigte Einachsmotormäher besteht im wesentlichen aus einem Lenker 1 zur Führung des Mähers, einem Verbrennungsmotor 2 zum Antrieb eines Mähbalkens 3 und des Fahrwerks 4 und einem ein Getriebegehäuse 5 aufweisenden Getriebeblock. Der Mähbalken kann in nicht näher erläuterter Weise gegen andere an der Frontseite des Mähers angeordnete Vorsatzgeräte ausgetauscht werden. Der Antrieb des Fahrwerks 4 sowie des Mähbalkens 3 oder ggf. anderer Vorsatzgeräte erfolgt in nicht näher erläuterter Weise über die in dem Gehäuse 5 angeordneten Getriebeteile vom Verbrennungsmotor 2 aus. Wie die Figur zeigt, verläuft die Radachse des Fahrwerks 4 parallel zum Mähbalken 3.

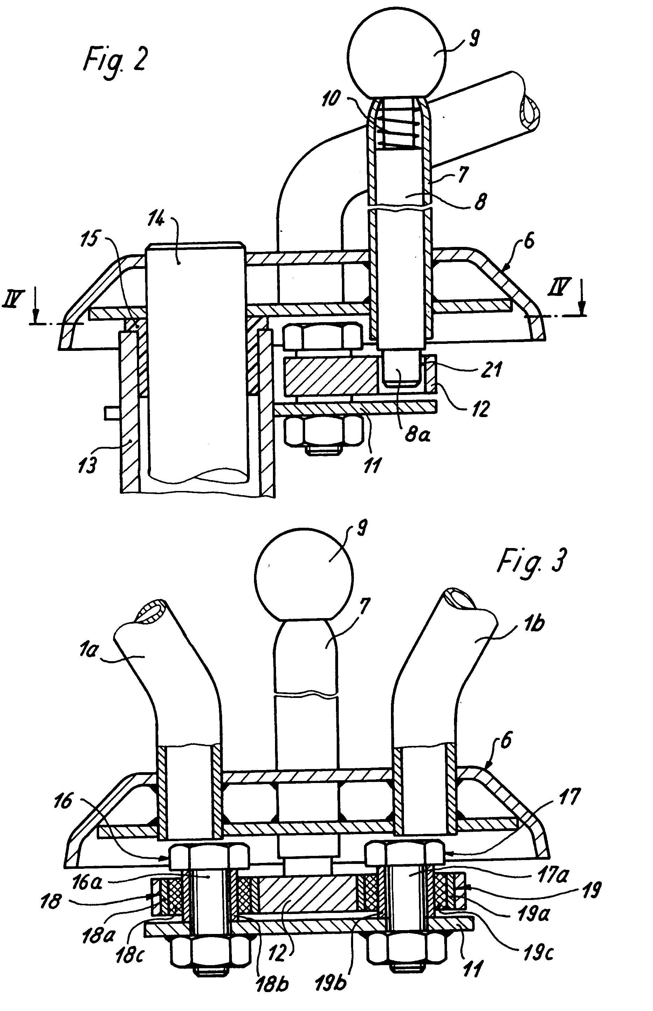

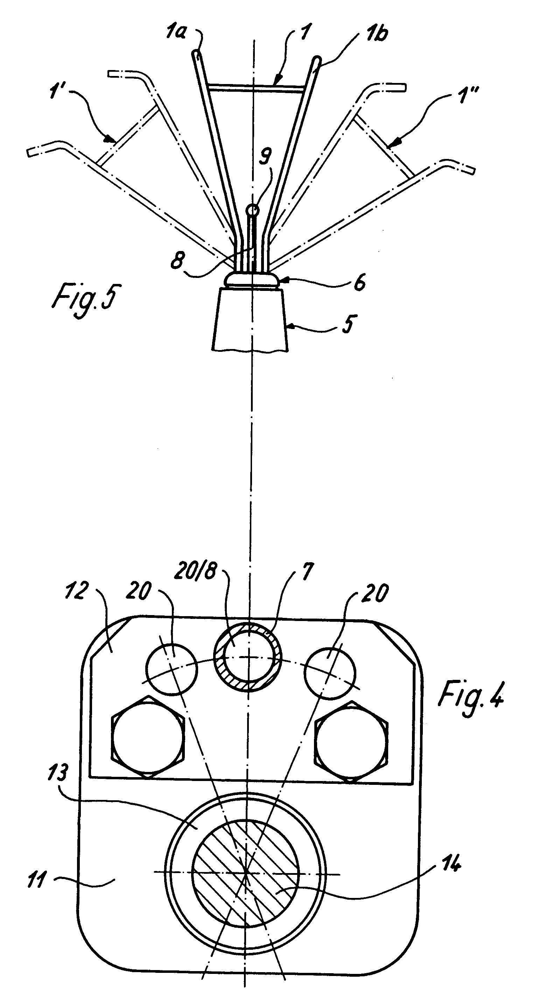

Wie anhand der Fig. 2 und 3 noch erläutert wird, ist der Lenker 1 im Sinne einer Steckverbindung an der Oberseite des Gehäuses 5 festgelegt. Wie insbesondere aus der Fig. 3 erkennbar, besteht der Lenker 1 aus zwei winkelförmigen Führungsholmen 1a,1b, die an den dem Getriebgehäuse 5 zugewandt liegenen Enden an einer doppelwandigen, in Richtung zum Getriebegehäuse 5 offenen Aufnahme 6 befestigt sind. Die beiden Wände 6a und 6b der Aufnahme 6 verlaufen parallel und im Abstand zueinander und sind mit zwei Bohrungen versehen, in die die Enden der Führungsholme 1a,1b eingesteckt und durch Schweißnähte mit der Aufnahme 6 verbunden sind. Wie die Fig. 2 und 3 ferner zeigen, weist die Aufnahme 6 ein nach oben sich erstreckendes Führungsrohr 7 auf, in dem ein Arretierbolzen 8 verschiebbar angeordnet ist, dessen Durchmesser dem Innendurchmesser des Führungsrohres 7 entspricht. An seinem oberen Ende ist der Arretierbolzen 8 mit einem im Durchmesser kleiner gehaltenen Ansatz versehen, auf den ein gegenüber dem oberen Ende des Führungsrohres 7 vorstehender Kugelkopf 9 aufgesetzt ist. Der Ansatz erstreckt sich bis in das Führungsrohr 7 hinein. Das obere Ende des Führungsrohres 7 ist zur Bildung eines Widerlagers für eine den Ansatz umgreifende Druckfeder 10 nach innen eingezogen. Das andere Ende der Druckfeder stützt sich gegen die durch den Ansatz gebildete Ringfläche ab. An der Oberseite des Getriebegehäuses 5 ist eine Grundplatte 11 angeordnet, die aber auch im Gegensatz zu der Darstellung nach den Fig. 2 und 3 Teil des Getriebegehäuses selbst sein kann. Die Grundplatte 11 liegt in einem Abstand zur Aufnahme 6. In dem Zwischenraum ist eine weitere Platte 12 angeordnet, die sich nur über einen Teilbereich der Grundplatte 11 erstreckt, wie die Fig. 4 zeigt. Die Platte 12 erstreckt sich annähernd über die dem Fahrwerk 4 zugewandt liegende Hälfte der Grundplatte 11. An der gegenüberliegenden, freien Hälfte der Grundplatte 11 ist ein sich in das Getriebegehäuse 5 erstreckendes Aufnahmerohr 13 festgelegt, in das ein an der Aufnahme 6 angeordneter Lagerzapfen 14 eingreift. Zur Beweglichkeit des Lenkers 1 ist in den oberen Bereich des Aufnahmerohres 13 eine Buchse 15 eingesetzt, die im vorliegenden Ausführungsbeispiel aus Kunststoff gefertigt ist. Wie insbesondere aus den Fig. 3 und 4 erkennbar, ist die Platte 12 an der Grundplatte 11 durch zwei Durchgangsschrauben 16,17 festgelegt. Wie die Fig. 3 zeigt, sind die dazu in der Platte 12 notwendigen Bohrungen wesentlich größer als der Durchmesser jedes Schraubenschaftes 16a,17a. In diese Bohrungen ist je ein federelastischer Ring 18,19 eingesetzt, dessen Innendurchmesser dem Durchmesser des Schraubenschaftes entspricht. Durch die federelastischen Ringe 18,19 ist die Platte 12 gegenüber der Platte 11 beweglich. Demzufolge ist auch eine Beweglichkeit zwischen dem Lenker 1 und dem Getriebegehäuse 5 möglich, wobei man davon ausgehen muß, daß bei erschütterungsfreiem Lenker sich das Getriebegehäuse 5 bewegt.

Im vorliegenden Ausführungsbeispiel besteht jeder federelastische Ring 18,19 aus einem Außenring 18a bzw. 19a, einem Innenring 18b,19b und einem dazwischen liegenden Zwischenring 18c und 19c, der im vorliegenden Ausführungsbeispiel aus Gummi gefertigt ist, und durch Vulkanisieren mit dem zugeordneten Außenring und dem zugeordneten Innenring verbunden ist. Die Innen- und Außenring sind aus Metall gefertigt, und in ihrer Wandstärke geringer als die der Zwischenringe. Wie aus der Fig. 3 erkennbar, steht jeder Innenring 18b bzw. 19b um einen gleichen Betrag gegenüber den Stirnseiten des jeweiligen Zwischenringes 18c bzw. 19c vor. Dadurch wird in besonders einfacher Weise ein Abstand zwischen der Grundplatte 11 und der Platte 12 und zwischen den Köpfen der Durchgangsschrauben 16,17 und den zugeordneten Enden der Zwischenringe 18c bzw. 19c und der Außenringe 18a bzw. 19a geschaffen. Dadurch wird die Bewegung der Platte 12 durch die Schrauben nicht behindert.

Wie aus der Fig. 4 erkennbar, sind in der Platte 12 im vorliegenden Ausführungsbeispiel drei Rastbohrungen 20 vorgesehen, in die das zugeordnete Ende des Arretierbolzens 8 wahlweise eingreifen kann. Die Rastbohrungen 20 liegen auf einem Kreisbogen, dessen Mittelpunkt mit der Längsachse des Lagerzapfens 4 bzw. mit der Schwenkachse des Lenkers 1 zusammenfällt. Die mittlere dieser Rastbohrungen 12 liegt auf der gedachten, rechtwinklig zur Achse des Fahrwerks 4 stehenden, durch die Schwenkachse des Lenkers 1 führenden Mittellängsachse des Motormähers. Die äußeren Rastbohrungen sind um einen gleichen Winkelbetrag nach außen versetzt. Aus der Fig. 2 ist noch erkennbar, daß der Durchmesser der Rastbohrungen 20 größer ist als das eingreifende Ende des Arretierbolzens 8, so daß ein umlaufender Spalt 21 gebildet wird. Dadurch läßt sich der Lenker 1 auch bei eingreifendem Arretierbolzen 8 um einen relativ kleinen Winkel um seine Schwenkachse bewegen. Im praktischen Einsat werden dadurch überhaupt keine oder nicht feststellbare Erschütterungen auf den Lenker übertragen. In der Fig. 5 ist die Stellung des Lenkers 1 in Vollinien gezeichnet, bei der der Arretierbolzen 8 in die mittlere Rastbohrung 20 eingreift. Beim Mähen von Böschungen oder entlang von Zäunen, Hecken o.dgl. läßt sich der Lenker in die mit 1′ und 1″ bezeichnete, in strichpunktierten Linien angedeutete Stellung schwenken. Dazu ist zunächst der Arretierbolzen 8 außer Eingriff mit der jeweiligen Rastbohrung 20 zu bringen.

Beim Mähen von Böschungen erfolgt durch die Schräglage eine linienförmige Berührung des Arretierbolzens 8 mit der jeweiligen Wandung der Rastbohrungen 20. In dieser Stellung werden besonders die federelastischen Ringe 18,19 wirksam,um die von dem Verbrennungsmotor 2 und dem Mähbalken 3 erzeugten Schwingungen zumindest so weit zu dämpfen, daß die auf den Lenker ggf. noch übertragenen Erschütterungen nicht feststellbar sind.

Aus der Fig. 2 ist noch erkennbar, daß der Arretierbolzen 8 an dem der Platte 12 zugewandt liegenden Ende einen im Durchmesser kleiner gehaltenen, in die jeweilige Rastbohrung 20 eingreifenden Ansatz 8a aufweist. Es sei noch bemerkt, daß das Spiel zwischem dem Ansatz 8a bzw. dem Arretierbolzen 8 und der jeweiligen Rastbohrung im Bereich zwischen 1,0 und 1,5 mm liegt.

Zum Transport des Mähers ist der Lenker abnehmbar, indem der Lagerzapfen 14 aus der Buchse 15 bzw. aus dem Aufnahmerohr 13 herausgezogen wird. Dazu sind keine Werkzeuge notwendig.

Bezugszeichen

| | |
|---|---|
| 1 | Lenker |
| 2 | Verbrennungsmotor |
| 3 | Mähbalken |
| 4 | Fahrwerk |
| 5 | Getriebegehäuse |
| 6 | Aufnahme |
| 7 | Führungsrohr |
| 8 | Arretierbolzen |
| 9 | Kugelknopf |
| 10 | Druckfeder |
| 11 | Grundplatte |
| 12 | Platte |
| 13 | Aufnahmerohr |
| 14 | Lagerzapfen |
| 15 | Buchse |
| 16 | Durchgangsschraube |
| 16a | Schraubenschaft |
| 17 | Durchgangsschraube |
| 17a | Schraubenschaft |
| 18 | Ring |
| 18a | Außenring |
| 18b | Außenring |
| 18c | Zwischenring |
| 19 | Ring |
| 19a | Außenring |
| 19b | Innenring |
| 19c | Zwischenring |
| 20 | Rastbohrung |

**Patentansprüche**

1. Einachsmotormäher mit einem gegen andere Bearbeitungs- und/oder Pflegegeräte auswechselbaren Mähbalken (3), der mit einem um eine vertikale Achse schwenkbaren und in verschiedenen Stellungen arretierbaren Lenker (1) versehen ist, wobei die Arretiervorrichtung aus einer mit mehreren Rastbohrungen (20) versehenen Platte (12) besteht, die durch Befestigungsschrauben (16,17) mit einer am Getriebegehäuse festgelegten Grundplatte (11) verbunden ist, und an der Grundplatte (11) ein vertikales Aufnahmerohr (13) für einen am Lenker (1) befestigten Lagerzapfen (14) angeordnet ist, und der Lenker (1) einen in vertikaler Richtung bewegbaren Arretierbolzen (8) aufweist, der in jeweils eine der Rastbohrungen (20) der Platte (12) eingreift, **dadurch gekennzeichnet,** daß zur Dämpfung der im wesentlichen durch ein oszillierendes Messer des Mähbalkens (3) erzeugten, quer zum Lagerzapfen (14) des Lenkers (1) wirkenden Schwingungen in der Platte (12) mindestens ein federelastischer Ring (18) bzw. (19) gelagert ist, durch den der Schaft (16a,17a) einer der Befestigungsschrauben (16,17) geführt ist, und daß zwischen der jeweiligen Rastbohrung (20) und dem eingreifenden Arretierbolzen (8) ein umlaufender Spalt (21) vorgesehen ist.

2. Einachsmotormäher nach Anspruch 1, dadurch gekennzeichnet, daß der umlaufende Spalt (21) so groß ausgebildet ist, daß der maximale Hubweg des Arretierbolzens (8) kleiner ist als der maximale Federweg des jeweiligen in dem federelastischen Ring (18 bzw. 19) gelagerten Schaftes (16a bzw. 17a) einer Befestigungsschraube (16 bzw. 17).

3. Einachsmotormäher nach Anspruch 1, dadurch gekennzeichnet, daß der federelastische Ring (18 bzw. 19) aus einem starren Außenring (18a bzw. 19a), einem starren Innenring (18b bzw. 19b) und einem Zwischenring (18c bzw. 19c) aus einem elastischen Material besteht.

4. Einachsmotormäher nach Anspruch 3, dadurch gekennzeichnet, daß der Außenring (18a bzw. 19a) und der Innenring (18b bzw. 19b) aus Stahl und der Zwischenring (18c bzw. 19c) aus Gummi oder einem gummiähnlichen Kunststoff gefertigt ist.

5. Einachsmotormäher nach Anspruch 3, dadurch gekennzeichnet, daß die Stirnenden des Innenrings (18b bzw. 19b) zumindest gegenüber den Stirnenden des Zwischenringes (18c bzw. 19c), vorzugsweise um einen gleichen Betrag vorstehen.

6. Einachsmotormäher nach Anspruch 3, dadurch gekennzeichnet, daß die Wandstärke des Zwischenringes (18c bzw. 19c) größer ist als die Wandstärke des Außenringes (18a bzw. 19a) oder des Innenringes (18b bzw. 19b).

7. Einachsmotormäher nach Anspruch 1, dadurch gekennzeichnet, daß der umlaufende Spalt (21) eine Weite von 1,0 bis 1,5 mm aufweist.

8. Einachsmotormäher nach einem oder mehreren der vorhergehenden Ansprüche, dadurch gekennzeichnet, daß der Arretierbolzen (8) einen in die jeweilige Rastbohrung (20) eingreifenden, im Durchmesser kleiner gehaltenen Ansatz (8a) aufweist.

9. Einachsmotormäher nach einem oder mehreren der vorhergehenden Ansprüche, dadurch gekennzeichnet, daß die Stirnfläche des Außenringes (18a bzw. 19a) und die Stirnflächen des Zwischenringes (18c bzw. 19c) fluchtend zu sich selbst und fluchtend zu der Ober- und zu der Unterseite der mit den Rastbohrungen (20) versehenen Platte (12) liegen.

## Claims

1. A single-axle power mower having a cutter bar (3) arranged interchangeably with other processing and/or cultivating attachments and being provided with a steering handle (1) pivotable about a vertical axis and lockable in various positions, the lokking device consisting of a plate (12) provided with one or several detent holes (20) and linked to a base plate (11) by fastening bolts (16,17), a vertical receptacle tube (13) being arranged for a bearing journal (14) fixed to the steering handle (1), the steering handle (1) having a locking pin (8) movable in vertical direction for engaging one of the detent holes (20) of the plate (12) at a time, characterized in that for dampening the oscillations substantially produced by an oscillating knife of the cutter bar (3) and acting transversally to the bearing journal (14) of the steering handle (1) at least one spring ring (18) or (19) is carried, through which the shank (16a,17a) of one of the fastening bolts (16,17) is passed, and in that between the detent hole (20) engaged from time to time and the engaging lokking pin (8) a surrounding gap is provided.

2. A single-axle power mower according to claim 1, characterized in that the surrounding gap is large enough for the maximum lift of the locking pin (8) to be smaller than the maximum spring excursion of the corresponding shank (16a or 17a) of a fastening bolt (16 or 17) carried within the spring ring (18 or 19).

3. A single-axle power mower according to claim 1, characterized in that the spring ring (18 or 19) consists of a rigid outer ring (18a or 19a), a rigid inner ring (18b or 19b) and an intermediate ring 18c or 19c) of resilient material.

4. A single-axle power mower according to claim 3, characterized in that the outer ring (18a or 19a) and the inner ring (18b or 19b) are made from steel and that the intermediate ring (18c or 19c) is made from rubber or a similar material.

5. A single-axle power mower according to claim 3, characterized in that the front ends of the inner ring (18b or 19b) protrude, at least in relation to the front ends of the intermediate ring (18c or 19c), preferably by an equal amount.

6. A single-axle power mower according to claim 3, characterized in that the wall thickness of the intermediate ring (18c or 19c) is greater than that of the outer ring (18a or 19a) or that of the inner ring (18b or 19b).

7. A single-axle power mower according to claim 1, characterized in that the surrounding gap (21) is 1.0 to 1.5 mm wide.

8. A single-axle power mower according to any of the preceding claims, characterized in that the locking pin (8) exhibits a lug (8a) engaging the detent hole (20) used from time to time and being smaller in its diameter.

9. A single-axle power mower according to any of the preceding claims, characterized in that the front faces of the outer ring (18a or 19a) and the front faces of the intermediate ring (18c or 19c) are located flush both with themselves and with the upper and lower sides of the plate (12) provided with the detent holes (20).

**Revendications**

1. Motofaucheuse à deux roues comportant une barre de fauchage (3) pouvant être échangée contre d'autres outils de culture et/ou d'entretien, et qui est pourvue d'un guidon (1) pouvant pivoter autour d'un axe vertical et pouvant être bloqué dans différentes positions, dans laquelle le dispositif de blocage est constitué d'une plaque (12) pourvue de plusieurs trous d'arrêt (20), laquelle plaque est reliée par des vis de fixation (16, 17) à une plaque de base (11) fixée sur la boîte de transmission, et dans laquelle il est prévu sur la plaque de base (11) un tube (13) vertical formant logement pour un tourillon (14) fixé sur le guidon (1) et dans laquelle le guidon (1) comporte une goupille d'arrêt (8) mobile dans la direction verticale qui s'engage dans l'un des trous d'arrêt (20) de la plaque (12), caractérisée en ce que pour amortir les oscillations essentiellement produites par une lame oscillante de la barre de fauchage (3), agissant transversalement au tourillon (14) du guidon (1), il est monté dans la plaque (12) au moins un anneau (18 ou 19) présentant l'élasticité d'un ressort à travers lequel passe la tige (16a, 17a) de l'une des vis de fixation (16, 17) et en ce qu'il est prévu une fente (21) entourant le trou d'arrêt (20) respectif et la goupille d'arrêt (8) s'engageant à l'intérieur de celui-ci.

2. Motofaucheuse à deux roues selon la revendication 1, caractérisée en ce que la fente (21) de pourtour est suffisamment grande pour que la course maximale de la goupille d'arrêt (8) soit inférieure à la course de ressort maximale de la tige (16a ou 17a) concernée montée dans l'anneau (18 ou 19) élastique, d'une vis de fixation (16 ou 17).

3. Motofaucheuse à deux roues selon la revendication 1, caractérisée en ce que l'anneau (18 ou 19) élastique est constitué d'un anneau extérieur (18a ou 19a) rigide, d'un anneau intérieur (18b ou 19b) rigide et d'un anneau intermédiaire (18c ou 19c) réalisé dans un matériau élastique.

4. Motofaucheuse à deux roues selon la revendication 3, caractérisée en ce que l'anneau extérieur (18a ou 19a) et l'anneau intérieur (18b ou 19b) sont en acier et l'anneau intermédiaire (18c ou 19c) en caoutchouc ou dans une matière synthétique similaire au caoutchouc.

5. Motofaucheuse à deux roues selon la revendication 3, caractérisée en ce que les extrémités frontales de l'anneau intérieur (18b ou 19b) font saillie au moins par rapport aux extrémités frontales de l'anneau intermédiaire (18c ou 19c), de préférence de la même distance.

6. Motofaucheuse à deux roues selon la revendication 3, caractérisée en ce que l'épaisseur de la paroi de l'anneau intermédiaire (18c ou 19c) est supérieure à celle de l'anneau extérieur (18a ou 19a) ou de l'anneau intérieur (18b ou 19b).

7. Motofaucheuse à deux roues selon la revendication 1, caractérisée en ce que la fente (21) de pourtour présente une ouverture de 1 à 1,5 mm.

8. Motofaucheuse à deux roues selon une ou plusieurs des revendications précédentes, caractérisée en ce que la goupille d'arrêt (8) présente un prolongement (8a) s'engageant dans le trou d'arrêt (20) respectif, de diamètre inférieur.

9. Motofaucheuse à deux roues selon une ou plusieurs des revendications précédentes, caractérisée en ce que les surfaces frontales de l'anneau extérieur (18a ou 19a) et les surfaces frontales de l'anneau intermédiaire (18c ou 19c) sont alignées entre elles ainsi qu'avec la face supérieure et la face inférieure de la plaque (12) pourvue des trous d'arrêt (20).

Fig. 1

Fig. 2

Fig. 3

Fig.5

Fig.4